# EUROPEAN PATENT SPECIFICATION

(11) **EP 1 687 155 B1**
(45) Date of publication and mention of the grant of the patent: **12.08.2009**
(21) Application number: 04797119.7
(22) Date of filing: 29.11.2004
(51) Int. Cl.: B60C 3/00

(54) **TYRE**
REIFEN
PNEU

(30) Priority: 28.11.2003 AU 2003906594
(43) Date of publication of application: 09.08.2006
(73) Proprietor: Crocodile Technology (UK) Limited, London WC2A 1AP (GB)
(72) Inventor: BURNS, Alan, Robert, Nedlands, Western Australia 6009 (AU)
(74) Representative: Crosby, Wendy Agnes
(86) International application number: PCT/AU2004/001678
(87) International publication number: WO 2005/051686

(56) References cited:
- WO-A1-00/76789
- US-A- 5 139 066

## Description

### Field of the Invention

This invention relates to a tyre, and more particularly to a tyre having provision for attachment to a wheel rim, of the type disclosed by US-A-5,139,066*.*

### Background Art

A tyre is typically pneumatic or non-pneumatic in form. Whilst pneumatic tyres are more common and widespread than non-pneumatic tyres, they are prone to punctures, a problem not inherent with non-pneumatic (solid rubber) tyres.

Regardless of whether a tyre is pneumatic or non-pneumatic, it is required to be firmly fitted onto a rim in order to avoid slippage with respect to the rim when under tractive or breaking loads. Accordingly, there have been various proposals for securing tyres onto wheel rims.

Pneumatic tyres typically have tyre beads which incorporate reinforcing wires and which are stretched over a retaining lip on the wheel rim. Split rim structures are also be used.

With non-pneumatic tyres, there are various arrangements for fitting tyres onto rims. One arrangement involves a so-called conical base tyre adapted to be clamped between a split rim. In another arrangement, the tyre incorporates a steel band at its radially inner end which is pressed onto a rim to provide a so-called "pressed-on" tyre.

Non-pneumatic tyres typically require dedicated wheel rims onto which they can be fitted. Unlike pneumatic tyres for which numerous rims are available, non-pneumatic tyres typically require dedicated wheel rims, which leads to a cost disadvantage arising from the manufacture of such rims. The need to provide dedicated wheel rims also limits the appeal of non-pneumatic tyres and increases the cost of fitting them onto vehicles previously fitted with pneumatic tyres.

Accordingly, there is a need for a non-pneumatic tyre which can be fitted onto a conventional wheel rim designed for a pneumatic tyre. A conventional wheel rim for a pneumatic tyre has a tyre support surface incorporating a bead seat on each side of the rim adjacent the rim edge. Each bead seat comprises an inner seat portion and an outer seat portion. The inner seat portion is inclined inwardly towards the axis of rotation of the wheel rim. The outer seat portion is upstanding with respect to the inner seat portion and terminates in an arcuate portion which defines the outer periphery of the wheel rim.

Fitment of a non-pneumatic (solid rubber) tyre onto a wheel rim designed for pneumatic tyres is usually not contemplated, as it is perceived that a portion of the solid rubber tyre would need to locate in the well of the wheel rim in order for the tyre to be supported properly. This would then make fitting and removal of the tyre very difficult, if not impossible.

Further, fitment of a tyre, whether pneumatic or non-pneumatic, onto a conventional rim designed for pneumatic tyres would, as a matter of routine, call for the services of an experienced tyre fitter, and possibly also a crane where larger tyres are involved. However, tyre fitters, as well as cranes, are not always readily available. This is particularly so at locations where vehicles fitted with non-pneumatic tyres are often used, as such industrial sites and remote areas.

It would be advantageous for there to be a non-pneumatic tyre which can be readily fitted onto a conventional rim designed for pneumatic tyres, using relatively simple mechanical procedures, without the need for the services of an experienced tyre fitter.

### Disclosure of the Invention

According to one aspect of the present invention there is provided a tyre adapted to be fitted onto a wheel rim designed for pneumatic tyres, the wheel rim having a tyre support surface incorporating a bead seat on each side of the rim, each bead seat comprising an inner seat portion and an outer seat portion terminating in an arcuate portion defining the outer periphery of the wheel rim, the tyre comprising a radially inner portion engagable with the wheel rim to be supportingly received thereon, the radially inner portion comprising a band adapted to be releasably fixed with respect to the outer periphery of the wheel rim by being welded thereto.

The welding may comprise welding, such as stitch or spot welding, at circumferentially spaced intervals around the band.

Preferably, the band comprises a rigid band of fixed diameter.

Conveniently, the rigid band comprises a metal band.

The band may be welded to either one or both of the arcuate portions defining the outer periphery of the wheel rim. There is, however, an advantage in welding the band only to the particular arcuate portion on the outer side of the wheel rim, as it would allow the tyre to be removed and replaced without the need to remove the wheel rim from the vehicle from which it is fitted.

This fixing arrangement is advantageous, as it is simple yet highly effective. The fitting process simply involves positioning the tyre onto the wheel rim and then welding the band thereto. For removal of the tyre, all that is necessary is to remove the welded bond, typically by grinding off the welds, and then withdraw the tyre from the rim. In this way, the tyre can be fitted and removed without the need for the services of an experienced tyre fitter. All that is required is access to welding equipment and an ability to weld.

It is believed that the welding would not damage the wheel rim to an extent that would preclude use of the wheel rim for its originally intended purpose of receiving a pneumatic tyre, should that be required at some later stage.

While welding is a particularly convenient and effective way of releasably fixing the tyre to the wheel rim, other ways of fixing are also possible, as alluded to above. For example, the rigid band may be bolted or otherwise mechanically fixed to the wheel rim. Bolting would, of course, require the provision of appropriate bolt holes in the band, and also that corresponding bolt holes be drilled into the wheel rim. In the event that the wheel rim was subsequently required for use with pneumatic tyres, all that would be necessary would be to plug the holes that had been drilled.

The band is preferably continuous.

However, the band may be circumferentially discontinuous, in that it may have a gap formed therein to provide a split band, or alternatively there may be a plurality of gaps in circumferentially spaced relation to provide a segmented band. The tyre may be manufactured with the band in a continuous form, and the or each gap formed at some later stage, such as during fitting of the tyre.

Further, the band may be laterally (axially) discontinuous, in that it may comprise two or more annular elements in spaced apart relation axially across the tyre.

The tyre may further comprise a cushioning structure provided on the band.

The cushioning structure may comprise a resiliently deformable body of appropriate material (such as rubber) bonded onto the band. The band provides a rigid base for supporting the resiliently deformable body. In this way, the resiliently deformable body does not extend into the well of the wheel rim, for otherwise fitting and removal of the tyre would be difficult.

The resiliently deformable body may incorporate a plurality of cavities separated by load-supporting walls. This enhances deformation characteristics of the tyre and provides for weight reduction.

The resiliently deformable body may comprise a unitary mass, or alternatively it may be of composite construction involving, for example, several layers of material having different characteristics. In one arrangement, the composite construction may comprise an inner layer of higher resilience for cushioning, and an outer layer which is harder and more durable to provide good wear characteristics. The outer layer may also have the ability to be re-treaded.

According to a second aspect of the invention there is provided a combination of a wheel rim and a tyre, the wheel rim comprising a tyre support surface incorporating a bead seat on each side of the rim, each bead seat comprising an inner seat portion and an outer seat portion terminating in an arcuate portion defining the outer periphery of the wheel rim, and the tyre comprising a radially inner portion engagable with the wheel rim to be supportingly received thereon, the radially inner portion comprising a band adapted to be releasably fixed with respect to the outer periphery of the wheel rim by being welded thereto.

According to a third aspect of the invention there is provided a wheel rim and tyre assembly, wherein the wheel rim comprises a tyre support surface incorporating a bead seat on each side of the rim, each bead seat comprising an inner seat portion and an outer seat portion terminating in an arcuate portion defining the outer periphery of the wheel rim, and wherein the tyre comprises a radially inner portion engaged with the wheel rim, the radially inner portion comprising a rigid band supportingly received on, and releasably fixed with respect to, the outer periphery of the wheel rim, the band being releasably fixed with respect to the outer periphery of the wheel rim by being welded thereto.

Whilst the invention as described hereinbefore has been concerned with non-pneumatic tyres, it could also be applicable to pneumatic tyres. For example, the cushioning structure provided on the rigid band may be pneumatic in construction.

### Brief Description of the Drawings

The invention will be better understood by reference to the following description of several specific embodiments thereof as shown in the accompanying drawings in which:
Figure 1 is a perspective view of a tyre according to a first embodiment of the invention;
Figure 2 is a side view of the tyre according to the first embodiment fitted onto a wheel rim;
Figure 3 is a half cross-sectional view of the tyre according to the first embodiment fitted onto a wheel rim; and
Figure 4 is a half cross-sectional view of the tyre according to a second embodiment fitted onto a wheel rim.

### Best Mode(s) for Carrying Out the Invention

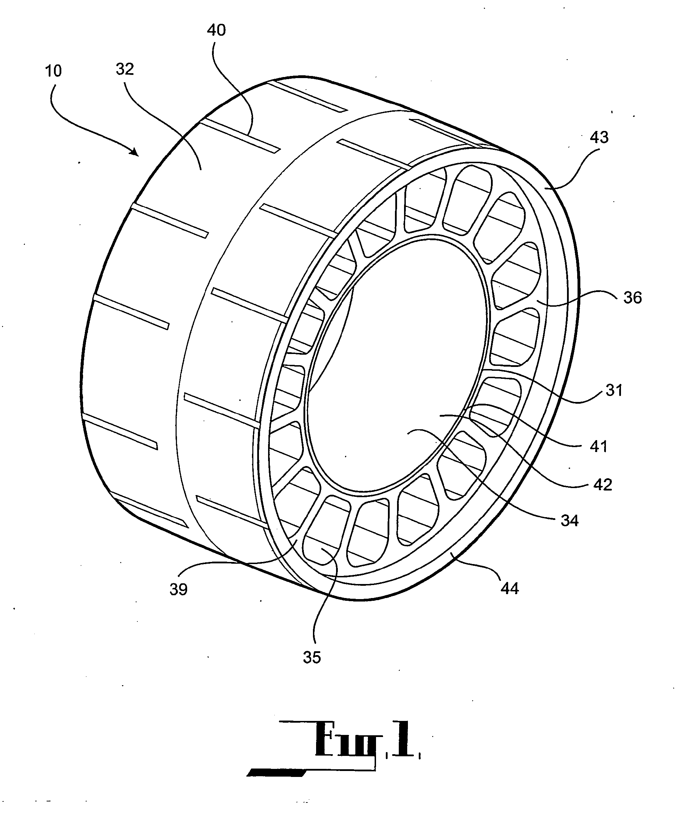

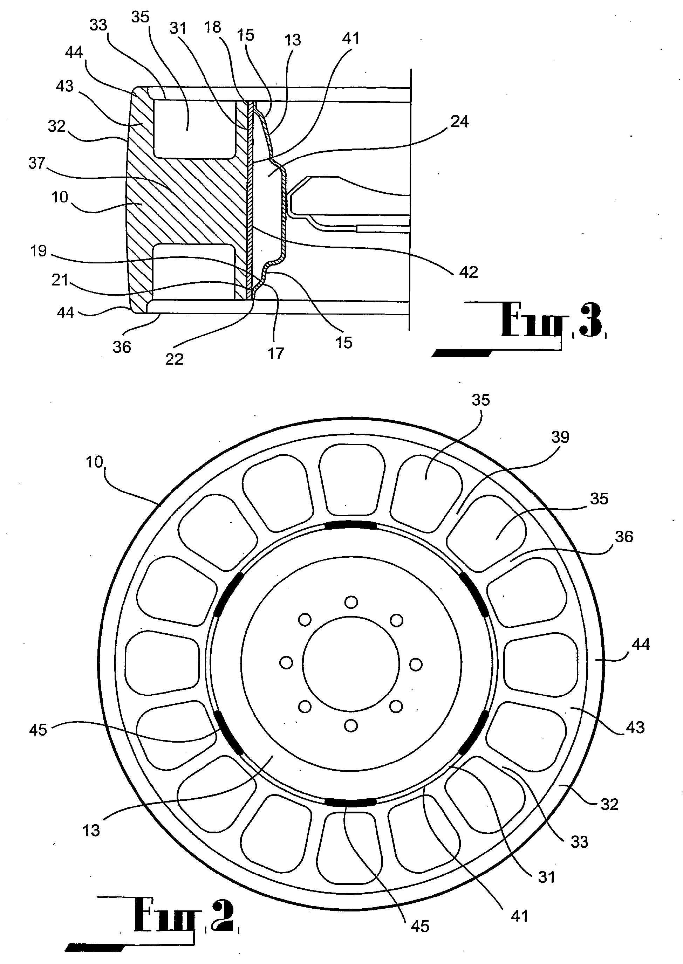

Referring now to Figures 1 to 3 of the accompanying drawings, there is shown a non-pneumatic tyre 10 according to a first embodiment. The tyre 10 is adapted to be fitted onto a conventional wheel rim 13 designed for pneumatic tyres. The wheel rim 13 has a tyre support surface 15 incorporating a seat 17 on each side of the rim adjacent the rim edge 18, as best seen in Figure 3. Each seat 17 comprises an inner seat portion 19, and an outer seat portion 21 terminating in an arcuate portion 22 defining the outer periphery of the wheel rim. The inner seat portion 19 is inclined inwardly towards the axis of rotation of the wheel rim, and the outer seat portion 21 is upstanding with respect to the inner seat portion. A well 24 is centrally located in the wheel rim 13 between the two seats 17. As mentioned, the wheel rim 13 is of conventional construction and is designed specifically to accommodate a pneumatic tyre.

It is a particular feature of the tyre 10 according to this embodiment that it can be fitted onto a standard rim for pneumatic tyres and does not require a dedicated rim structure as is typically the case for previously known non-pneumatic tyres.

The tyre 10 has a radially inner portion 31, a radially outer portion 32 incorporating a tread structure 40, and an intermediate portion 33 extending between the radially inner and outer portions to provide cushioning. The tyre 10 also has a central opening 34 and opposed sides 36. The intermediate portion 33 comprises a multitude of holes 35 opening onto opposed sides of the tyre. The holes 35 do not extend entirely through the body 30 and so holes opening on to one side of the tyre are separated from holes opening onto the other side of the tyre by a central circumferential load supporting wall 37. Holes 35 on the same side of the tyre are separated by load supporting walls 39. The load supporting walls 37, 39 extend radially with respect to the tyre and flex under load to provide cushioning.

When viewed in cross-section, the sides of the load bearing wall 37 may be staggered or parallel. The size and configuration of the load bearing walls 37 are determined by the depth of the holes 35.

The radially inner portion 31 of the tyre is defined by a rigid band 41 which is formed of metal, typically steel. A body 43 of resiliently deformable material such as rubber is bonded onto the band 41. The body 43 provides the radially outer portion 32 incorporating tread structure 40, and also the intermediate portion 33 extending between the radially inner and outer portions to provide the cushioning. The body 43 is of composite construction, involving several layers of deformable material, such as rubber, bonded together. The layers have different characteristics, one layer providing the outer portion 32 and the other layer providing the intermediate portion 33.

As can be best seen in Figure 3 of the drawings, the body 43 extends laterally beyond the rigid band 41 at the radially outer portion 32 thereof, to provide an overhang 44 on each side of the tyre.

The rigid band 41 is internally sized so that it can be positioned around the wheel rim 13, with the rigid band being supportingly received on the outer periphery of the wheel rim, as best seen in Figure 3. More particularly, the inner surface 42 of the rigid band 41 locates on the outer periphery of the wheel rim defined by the two arcuate portions 22.

The band 41 thus provides a rigid base for supporting the body 43, including in particular the load supporting walls 37, 39. The band 41, and also body 43 supported thereon, does not extend into the well 24 of the wheel rim 13, for otherwise fitting and removal of the tyre would be impeded.

The rigid band 41 is releasably fixed with respect to the outer periphery of the wheel rim 13 by being welded thereto. In this embodiment, the rigid band 41 is welded to either or both of the arcuate portions 22 by a series of stitch welds 45, as illustrated in Figure 2 of the drawings. The stitch welds 45 provide a simple yet highly effective way of fixing the tyre 10 to the wheel rim 13.

The fitting process simply involves positioning the tyre 10 onto the wheel rim 13 and then welding the rigid band 41 to the outer periphery of the wheel rim. Positioning of the tyre onto the wheel rim is a simple procedure, as the rigid band 41 is sized to fit onto the outer periphery of the wheel rim 13. For subsequent removal of the tyre 10 from the wheel rim 13, all that is necessary is to grind off the stitch welds 45 so that the tyre can be withdrawn from the wheel rim.

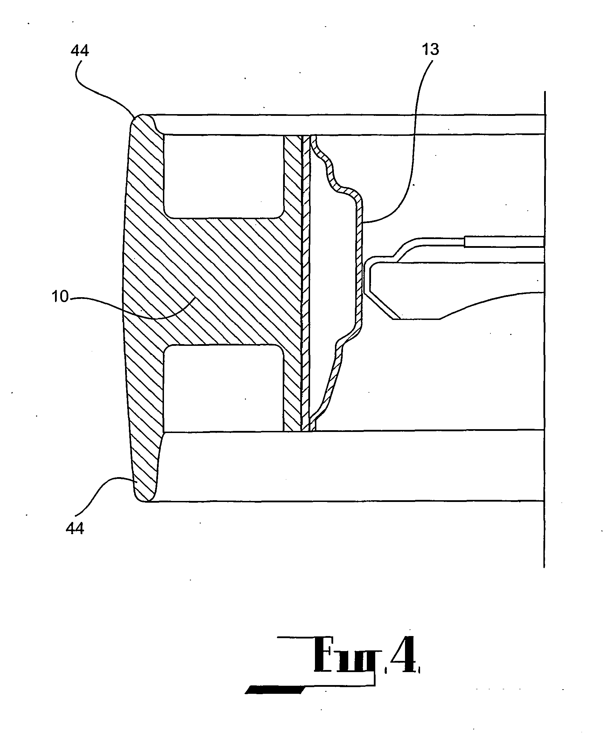

The second embodiment, which is shown in Figure 4 of the drawings, is similar to the first embodiment and so corresponding reference numerals are employed to identify similar parts. However, in the second embodiment, the overhang 44 to one side of the tyre is greater than that on the other side of the tyre, as can be seen in the drawing.

From the foregoing, it is evident that the two embodiments each provide a tyre which is of relatively simple construction and which can be simply fitted onto a conventional wheel rim designed for pneumatic tyres. This is particularly advantageous, as it avoids the need for a dedicated wheel rim which would otherwise limit the appeal of the non-pneumatic tyres, as well as increasing the cost of fitting them onto vehicles previously fitted with pneumatic tyres.

It is a particular feature of the embodiments that the tyre 10 can be fitted to, and removed from, the wheel rim without the need for the services of an experienced tyre fitter. All that is required is access to welding equipment and an ability to weld.

It should be appreciated that the scope of the invention is not limited to the scope of the two embodiments described. For example, the rigid band need not necessarily be fixed to the wheel rim by way of welding. The rigid band may be bolted or otherwise mechanically fixed to the wheel rim.

Improvements and modifications may be incorporated without departing from the scope of the invention.

Throughout the specification, unless the context requires otherwise, the word "comprise" or variations such as "comprises" or "comprising", will be understood to imply the inclusion of a stated integer or group of integers but not the exclusion of any other integer or group of integers.

## Claims

1. A tyre (10) adapted to be fitted onto a wheel rim (13) designed for pneumatic tyres, the wheel rim having a tyre support (15) surface incorporating a bead seat (17) on each side of the rim, each bead seat comprising an inner seat portion (19) and an outer seat portion (21) terminating in an arcuate portion (22) defining the outer periphery of the wheel rim, the tyre comprising a radially inner portion (31) engagable with the wheel rim to be supportingly received thereon, **characterized by** the radially inner portion comprising a band (41) adapted to be releasably fixed with respect to the outer periphery of the wheel rim by being welded thereto.

2. A tyre according to claim 1 wherein the band comprises a rigid band of fixed diameter.

3. A tyre according to claim 2 wherein the rigid band comprises a metal band.

4. A tyre according to claim 1, 2 or 3 further comprising a cushioning structure provided on the band.

5. A tyre according to claim 4 wherein the cushioning structure comprises a resiliently deformable body bonded onto the band.

6. A tyre according to claim 5 wherein the resiliently deformable body incorporates a plurality of cavities separated by load-supporting walls.

7. A tyre according to claim 5 or 6 wherein the resiliently deformable body comprises a unitary mass.

8. A tyre according to claim 5 or 6 wherein the resiliently deformable body is of composite construction comprising a plurality of layers of material having different characteristics.

9. A tyre according to claim 8 wherein the body comprises an inner layer of higher resilience for cushioning, and an outer layer which is harder and more durable to provide good wear characteristics.

10. A wheel rim and tyre assembly, wherein the wheel rim (13) comprises a tyre support surface (15) incorporating a bead seat (17) on each side of the rim, each bead seat comprising an inner seat portion (19) and an outer seat portion (21) terminating in an arcuate portion (22) defining the outer periphery of the wheel rim, and wherein the tyre comprises a radially inner portion (31) engaged with the wheel rim, **characterized by** the radially inner portion comprising a rigid band supportingly received on, and releasably fixed with respect to, the outer periphery of the wheel rim, the band being releasably fixed with respect to the outer periphery of the wheel rim by being welded thereto.

11. A wheel rim and tyre assembly according to claim 10 wherein the band comprises a metal band of fixed diameter.

12. A wheel rim and tyre assembly according to claim 11 wherein the welding comprises welding at circumferentially spaced intervals around the band.

## Patentansprüche

1. Ein Reifen (10), der angepasst ist, um auf eine für Luftreifen entworfene Radfelge (13) aufgezogen zu werden, wobei die Radfelge eine Reifenauflagefläche (15) aufweist, die auf jeder Seite der Felge einen Wulstsitz (17) einschließt, wobei jeder Wulstsitz einen inneren Sitzabschnitt (19) und einen äußeren Sitzabschnitt (21), endend in einem gebogenen Abschnitt (22), den äußeren Umfang der Radfelge definierend, beinhaltet, wobei der Reifen einen radial inneren Abschnitt (31), der in die Radfelge eingreifen kann, um darauf aufliegend aufgenommen zu werden, beinhaltet, **dadurch gekennzeichnet, dass** der radial innere Abschnitt ein Band (41) beinhaltet, das angepasst ist, um mit Bezug auf den äußeren Umfang der Radfelge lösbar fixiert zu sein, indem es daran geschweißt ist.

2. Reifen gemäß Anspruch 1, wobei das Band ein steifes Band von festgelegtem Durchmesser beinhaltet.

3. Reifen gemäß Anspruch 2, wobei das steife Band ein Band aus Metall beinhaltet.

4. Reifen gemäß Anspruch 1, 2 oder 3, der ferner eine auf dem Band bereitgestellte dämpfende Struktur beinhaltet.

5. Reifen gemäß Anspruch 4, wobei die dämpfende Struktur einen elastisch verformbaren Körper, der mit dem Band verbunden ist, beinhaltet.

6. Reifen gemäß Anspruch 5, wobei der elastisch verformbare Körper eine Vielzahl von durch lasttragende Wände getrennten Hohlräumen einschließt.

7. Reifen gemäß Anspruch 5 oder 6, wobei der elastisch verformbare Körper eine einheitliche Masse beinhaltet.

8. Reifen gemäß Anspruch 5 oder 6, wobei der elastisch verformbare Körper von einer Verbundkonstruktion ist, die eine Vielzahl von Schichten Material mit unterschiedlichen Eigenschaften beinhaltet.

9. Reifen gemäß Anspruch 8, wobei der Körper eine innere Schicht höherer Widerstandsfähigkeit zur Dämpfung und eine äußere Schicht, die härter und beständiger ist, um gute Verschleißeigenschaften bereitzustellen, beinhaltet.

10. Eine Radfelge- und Reifenanordnung, wobei die Radfelge (13) eine Reifenauflagefläche (15) beinhaltet, die auf jeder Seite der Felge einen Wulstsitz (17) einschließt, wobei jeder Wulstsitz einen inneren Sitzabschnitt (19) und einen äußeren Sitzabschnitt (21), endend in einem gebogenen Abschnitt (22), den äußeren Umfang der Radfelge definierend, beinhaltet, und wobei der Reifen einen radial inneren Abschnitt (31), der in die Radfelge eingreift, beinhaltet, **dadurch gekennzeichnet, dass** der radial innere Abschnitt ein auf dem äußeren Umfang der Radfelge aufliegend aufgenommenes und mit Bezug auf den äußeren Umfang der Radfelge lösbar fixiertes steifes Band beinhaltet, wobei das Band mit Bezug auf den äußeren Umfang der Radfelge lösbar fixiert ist, indem es daran geschweißt ist.

11. Radfelge- und Reifenanordnung gemäß Anspruch 10, wobei das Band ein Band aus Metall von festgelegtem Durchmesser beinhaltet.

12. Radfelge- und Reifenanordnung gemäß Anspruch 11, wobei die Schweißung die Schweißung an im Umfang mit Abstand angeordneten Intervallen um das Band beinhaltet.

## Revendications

1. Un pneu (10) adapté pour être monté sur une jante de roue (13) conçue pour des pneumatiques, la jante de roue présentant une surface formant support pour pneu (15) incorporant un repos de talon (17) de chaque côté de la jante, chaque repos de talon comprenant une portion de repos interne (19) et une portion de repos externe (21) se terminant en une portion arquée (22) définissant la périphérie externe de la jante de roue, le pneu comprenant une portion radialement interne (31) pouvant se mettre en prise avec la jante de roue pour qu'elle soit reçue en étant soutenue sur celle-ci, **caractérisé par le fait que** la portion radialement interne comprend une bande (41) adaptée pour être fixée de façon amovible par rapport à la périphérie externe de la jante de roue par soudage sur celle-ci.

2. Un pneu selon la revendication 1 dans lequel la bande comprend une bande rigide de diamètre fixe.

3. Un pneu selon la revendication 2 dans lequel la bande rigide comprend une bande métallique.

4. Un pneu selon la revendication 1, 2 ou 3 comprenant en outre une structure d'amortissage fournie sur la bande.

5. Un pneu selon la revendication 4 dans lequel la structure d'amortissage comprend un corps déformable de façon élastique collé sur la bande.

6. Un pneu selon la revendication 5 dans lequel le corps déformable de façon élastique incorpore une pluralité de cavités séparées par des parois de support de charge.

7. Un pneu selon la revendication 5 ou 6 dans lequel le corps déformable de façon élastique comprend une masse unitaire.

8. Un pneu selon la revendication 5 ou 6 dans lequel le corps déformable de façon élastique est réalisé en une construction composite comprenant une pluralité de couches de matériau ayant différentes caractéristiques.

9. Un pneu selon la revendication 8 dans lequel le corps comprend une couche interne d'élasticité plus élevée pour l'amortissage, et une couche externe qui est plus dure et plus durable pour fournir de bonnes caractéristiques d'usure.

10. Un assemblage de jante de roue et pneu, dans lequel la jante de roue (13) comprend une surface de support de pneu (15) incorporant un repos de talon (17) de chaque côté de la jante, chaque repos de talon comprenant une portion de repos interne (19) et une portion de repos externe (21) se terminant en une portion arquée (22) définissant la périphérie externe de la jante de roue, et dans lequel le pneu comprend une portion radialement interne (31) en prise avec la jante de roue, **caractérisé en ce que** la portion radialement interne comprend une bande rigide reçue en étant soutenue sur, et fixée de façon amovible par rapport à, la périphérie externe de la jante de roue, la bande étant fixée de façon amovible par rapport à la périphérie externe de la jante de roue par soudage sur celle-ci.

11. Un assemblage de jante de roue et pneu selon la revendication 10 dans lequel la bande comprend une bande métallique de diamètre fixe.

12. Un assemblage de jante de roue et pneu selon la revendication 11 dans lequel le soudage comprend souder à des intervalles espacés de façon circonférentielle autour de la bande.
